# EUROPEAN PATENT APPLICATION

(11) **EP 4 712 411 A1**
(43) Date of publication of application: **18.03.2026**
(21) Application number: 24818610.8
(22) Date of filing: 03.06.2024
(51) Int. Cl.: H04L 9/40, H04L 45/00, H04L 45/745

(54) **INFORMATION PROCESSING METHOD AND APPARATUS**

(30) Priority: 06.06.2023 CN 202310666203
(71) Applicant: Huawei Technologies Co., Ltd., Shenzhen, Guangdong 518129 (CN)
(72) Inventor: HUANG, Mingqing, Shenzhen, Guangdong 518129 (CN); GENG, Nan, Shenzhen, Guangdong 518129 (CN); CHEN, Shuanglong, Shenzhen, Guangdong 518129 (CN); LIU, Mingxing, Shenzhen, Guangdong 518129 (CN)
(74) Representative: Pfenning, Meinig & Partner mbB
(86) International application number: PCT/CN2024/097029
(87) International publication number: WO 2024/251078

(57) **Abstract**

Embodiments of this application disclose an information processing method. A network device may receive security verification information sent by a server, where the security verification information is used to perform security verification on BGP routing information, the security verification information includes a first business relationship and a second business relationship that correspond to a first network domain, and the first business relationship is C2P. After receiving the security verification information, the network device may store the security verification information, to subsequently perform security verification on the BGP routing information based on the security verification information. According to the solution in embodiments of this application, when performing security verification on the BGP routing information, in addition to performing security verification based on the first business relationship corresponding to the first network domain in the conventional technology, the network device may further perform security verification based on the second business relationship corresponding to the first network domain. Therefore, according to the solution in embodiments of this application, accuracy of a verification result obtained by performing security verification on the BGP routing information can be improved.

## Description

This application claims priority to Chinese Patent Application No. 202310666203.3, filed with the China National Intellectual Property Administration on June 6, 2023 and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

With the development of network technologies, there are more network attack methods. A border gateway protocol (Border Gateway Protocol, BGP) route attack is an attack method frequently used by attackers. A path hijacking attack and a path leakage attack are two BGP route attack methods frequently used.

To reduce BGP route attacks, a network device may perform security verification on BGP routing information, to determine whether a BGP route attack exists, and take a corresponding processing measure when determining that the BGP route attack exists, to ensure network security.

However, in a current manner in which the network device performs security verification on the BGP routing information, an accurate verification result cannot be obtained. Therefore, a solution is urgently needed to resolve the foregoing problem.

### SUMMARY

Embodiments of this application provide an information processing method, to improve accuracy of a verification result obtained by performing security verification on BGP routing information by a network device.

According to a first aspect, an embodiment of this application provides an information processing method, and the method may be applied to a network device. In a specific example, the network device may receive security verification information sent by a server, where the security verification information is used to perform security verification on BGP routing information, the security verification information includes a first business relationship corresponding to a first network domain and a second business relationship corresponding to the first network domain, and the first business relationship is customer to provider (customer to provider, C2P). After receiving the security verification information, the network device may store the security verification information, to subsequently perform security verification on the BGP routing information based on the security verification information. In addition to the first business relationship corresponding to the first network domain, the security verification information further includes the second business relationship corresponding to the first network domain. Therefore, when performing security verification on the BGP routing information, in addition to performing security verification based on the first business relationship corresponding to the first network domain in the conventional technology, the network device may further perform security verification based on the second business relationship corresponding to the first network domain. In other words, the network device uses more business relationships to perform security verification on the BGP routing information, and correspondingly, accuracy of an obtained verification result is improved. Therefore, according to the solution in this embodiment of this application, the accuracy of the verification result obtained by performing security verification on the BGP routing information by the network device can be improved.

In a possible implementation, the network device may further obtain first BGP routing information. For example, the network device may receive the first BGP routing information from another network device, and perform security verification on the first BGP routing information based on the security verification information. In addition to the first business relationship corresponding to the first network domain, the security verification information further includes the second business relationship corresponding to the first network domain. Therefore, when performing security verification on the first BGP routing information, in addition to performing security verification based on the first business relationship corresponding to the first network domain in the conventional technology, the network device may further perform security verification based on the second business relationship corresponding to the first network domain. In other words, the network device uses more business relationships to perform security verification on the first BGP routing information, and correspondingly, accuracy of an obtained verification result is improved.

In a possible implementation, when the BGP routing information is verified, especially when it is determined whether path hijacking exists, if a topological relationship of a network domain can be learned, a possibility of identifying path hijacking can be effectively increased. Therefore, in an example, the security verification information may further include a topological relationship of the first network domain.

In a possible implementation, considering that a possibility of identifying path hijacking can be effectively increased based on a neighbor relationship between network domains, the topological relationship of the first network domain may be at least one second network domain that has a neighbor relationship with the first network domain.

In a possible implementation, to further improve accuracy of performing security verification on a BGP route, the security verification information may further include a routing transmission path that supports transmission through the first network domain. In this way, when security verification is performed on the BGP routing information, security verification may be performed with reference to the routing transmission path that supports transmission through the first network domain.

In a possible implementation, it is considered that although BGP route transmission needs to generally comply with a routing transmission constraint, in some special scenarios, transmission of the BGP routing information is allowed to be performed through a path that violates the routing transmission constraint. To avoid a case in which the BGP routing information of which transmission is performed through a valid path that "violates the routing transmission constraint" fails to pass security verification, in an example, the foregoing routing transmission path that supports transmission through the first network domain may be a routing transmission path that does not comply with the routing transmission constraint. The routing transmission path that does not comply with the routing transmission constraint may also be referred to as a "valley path", and the two paths may be used alternately.

In a possible implementation, the second business relationship includes one or more of provider to customer (provider to customer, P2C), peer to peer (peer to peer, P2P), sibling (sibling), partial transit (partial), and hybrid (hybrid). In this case, when performing security verification on the BGP routing information based on the security verification information, the network device may not only determine which network domains are providers of the first network domain, but also determine a customer of the first network domain, or determine which network domains have a P2P business relationship with the first network domain, or determine which network domains have a partial business relationship with the first network domain, or determine which network domains have a hybrid business relationship with the first network domain, to improve accuracy of performing security verification on the BGP routing information.

In a possible implementation, the network device may actively request the security verification information from the server (for example, a first server). In a specific example, the network device may send a request message to the server, where the request message is used to request information used to perform security verification on the BGP routing information. Correspondingly, after receiving the request message, the server may return the security verification information to the network device based on the request message.

In a possible implementation, the network device may request, from the server as required, information needed by the network device. In this case, the request message may include an information type, and the information type indicates a type of information that is needed by the network device and that is used to perform security verification on the BGP routing information. In other words, the information type indicates the server to return, to the network device, information that is about the information type and that is for performing security verification on the BGP routing information. For example, if the network device needs business relationship information, the information type may include a business relationship. For another example, if the network device needs topological information, the information type may include a topological relationship. For another example, if the network device needs valley path information, the information type may include a valley path. Correspondingly, after receiving the request message, the first server may parse the request message to obtain the information type. Further, the first server may obtain the information that is about the information type and that is for performing security verification on the BGP routing information, and send the obtained security verification information to the network device.

In a possible implementation, during a specific implementation in which the network device receives the security verification information sent by the server, for example, the network device may receive a first protocol data unit (Protocol Data Unit, PDU) sent by the server, where the first PDU includes the security verification information. In this manner, the first server may send the security verification information to the network device by using one PDU. Correspondingly, the network device may obtain the security verification information by using the PDU.

In a possible implementation, the first PDU may include at least one first type length value (type length value, TLV) field, the at least one first TLV field is used to carry the security verification information, and one first TLV field is used to carry one type of information in the security verification information. In this case, the network device may parse the at least one first TLV to obtain the security verification information.

In a possible implementation, during a specific implementation in which the network device receives the security verification information sent by the server, for example, the network device may receive a second PDU and a third PDU that are sent by the server, where the second PDU includes the first business relationship, and the third PDU includes other information in the security verification information other than the first business relationship. In this case, a format of a PDU of the first business relationship sent by the server to the network device in the conventional technology may be reused for a format of the second PDU. In this manner, the format of the PDU of the first business relationship sent by the server to the network device may not need to be extended.

In a possible implementation, the third PDU may include at least one second TLV, the at least one second TLV is used to carry the other information, and one second TLV carries one type of information in the other information. In this case, the network device may parse the at least one second TLV to obtain the other information in the security verification information.

According to a second aspect, an embodiment of this application provides an information processing method, and the method may be applied to a first server. In a specific example, the first server may obtain security verification information, where the security verification information is used to perform security verification on BGP routing information, the security verification information includes a first business relationship corresponding to a first network domain and a second business relationship corresponding to the first network domain, and the first business relationship is C2P. After obtaining the security verification information, the first server may send the security verification information to a network device, so that the network device performs security verification on the BGP routing information based on the security verification information. In addition to the first business relationship corresponding to the first network domain, the security verification information further includes the second business relationship corresponding to the first network domain. Therefore, when performing security verification on the BGP routing information, in addition to performing security verification based on the first business relationship corresponding to the first network domain in the conventional technology, the network device may further perform security verification based on the second business relationship corresponding to the first network domain. In other words, the network device uses more business relationships to perform security verification on the BGP routing information, and correspondingly, accuracy of an obtained verification result is improved. Therefore, according to the solution in this embodiment of this application, the accuracy of the verification result obtained by performing security verification on the BGP routing information by the network device can be improved.

In a possible implementation, the security verification information further includes a topological relationship of the first network domain and/or a routing transmission path that supports transmission through the first network domain.

In a possible implementation, the topological relationship includes at least one second network domain that has a neighbor relationship with the first network domain.

In a possible implementation, the routing transmission path that supports transmission through the first network domain includes a routing transmission path that supports transmission through the first network domain and that does not comply with a routing transmission constraint.

In a possible implementation, the second business relationship includes one or more of the following: provider to customer P2C, peer to peer P2P, sibling sibling, partial transit partial, and hybrid hybrid.

In a possible implementation, the first server may obtain the prestored security verification information. In a specific example, the first server may obtain the security verification information by using a simplified local internet number resource management (simplified local internet number resource management, SLURM) file, and store the security verification information.

In a possible implementation, it is considered that there are a large quantity of servers that can be used for registration of information for performing security verification on the BGP routing information. To synchronize registered information on the servers, the first server may obtain the SLURM file from a second server. In a specific example, the first server may send an information synchronization message to the second server, where the information synchronization message is used to request synchronization of the information used to perform security verification on the BGP routing information. After receiving the information synchronization message, the second server may obtain the locally stored SLURM file, and send the SLURM file to the first server.

In a possible implementation, the SLURM file may include a first object, and the first object may be used to carry all information in the security verification information. In this case, the network device may parse the first object to obtain the security verification information.

In a possible implementation, the SLURM file may include a second object and a third object, and the second object and the third object are jointly used to carry the security verification information. In other words, the second object and the third object may respectively carry a part of information in the security verification information. In a specific example, the second object may be used to carry the first business relationship, and the third object may be used to carry other information in the security verification information other than the first business relationship. In this case, the second object may be the same as an object used to carry the first business relationship in the conventional technology. In this manner, the object used to carry the first business relationship in the conventional technology may not need to be extended or modified.

In a possible implementation, the method further includes: receiving a request message sent by the network device, where the request message is used to request the information used to perform security verification on the BGP routing information; and the sending the security verification information to the network device includes: sending the security verification information to the network device based on the request information.

In a possible implementation, the request message includes an information type, the information type indicates the first server to return, to the network device, information that is about the information type and that is for performing security verification on the BGP routing information, and correspondingly, the security verification information includes the information about the information type.

In a possible implementation, the sending the security verification information to the network device includes: sending a first protocol data unit PDU to the network device, where the first PDU includes the security verification information.

In a possible implementation, the first PDU includes at least one first type length value TLV field, the at least one first TLV field is used to carry the security verification information, and one first TLV field is used to carry one type of information in the security verification information.

In a possible implementation, the sending the security verification information to the network device includes: sending a second PDU and a third PDU to the network device, where the second PDU includes the first business relationship, and the third PDU includes other information in the security verification information other than the first business relationship.

In a possible implementation, the third PDU includes at least one second TLV, the at least one second TLV is used to carry the other information, and one second TLV carries one type of information in the other information.

According to a third aspect, an embodiment of this application provides an information processing apparatus, used in a network device. The apparatus includes: a receiving unit, configured to receive security verification information sent by a server, where the security verification information is used to perform security verification on border gateway protocol BGP routing information, the security verification information includes a first business relationship corresponding to a first network domain and a second business relationship corresponding to the first network domain, and the first business relationship is customer to provider C2P; and a processing unit, configured to store the security verification information.

In a possible implementation, the processing unit is further configured to: obtain first BGP routing information; and perform security verification on the first BGP routing information based on the security verification information.

In a possible implementation, the security verification information further includes a topological relationship of the first network domain and/or a routing transmission path that supports transmission through the first network domain.

In a possible implementation, the topological relationship of the first network domain includes at least one second network domain that has a neighbor relationship with the first network domain.

In a possible implementation, the routing transmission path that supports transmission through the first network domain includes a routing transmission path that supports transmission through the first network domain and that does not comply with a routing transmission constraint.

In a possible implementation, the second business relationship includes one or more of the following: provider to customer P2C, peer to peer P2P, sibling sibling, partial transit partial, and hybrid hybrid.

In a possible implementation, the apparatus further includes: a sending unit, configured to send a request message to the server, where the request message is used to request information used to perform security verification on the BGP routing information. The receiving unit is configured to receive the security verification information returned by the server for the request message.

In a possible implementation, the request message includes an information type, the information type indicates the server to return, to the network device, information that is about the information type and that is for performing security verification on the BGP routing information, and correspondingly, the security verification information includes the information about the information type.

In a possible implementation, the receiving unit is configured to receive a first protocol data unit PDU sent by the server, where the first PDU includes the security verification information.

In a possible implementation, the first PDU includes at least one first type length value TLV field, the at least one first TLV field is used to carry the security verification information, and one first TLV field is used to carry one type of information in the security verification information.

In a possible implementation, the receiving unit is configured to receive a second PDU and a third PDU that are sent by the server, where the second PDU includes the first business relationship, and the third PDU includes other information in the security verification information other than the first business relationship.

In a possible implementation, the third PDU includes at least one second TLV, the at least one second TLV is used to carry the other information, and one second TLV carries one type of information in the other information.

According to a fourth aspect, an embodiment of this application provides an information processing apparatus, used in a first server. The apparatus includes: a processing unit, configured to obtain security verification information, where the security verification information is used to perform security verification on border gateway protocol BGP routing information, the security verification information includes a first business relationship corresponding to a first network domain and a second business relationship corresponding to the first network domain, and the first business relationship is customer to provider C2P; and a sending unit, configured to send the security verification information to a network device.

In a possible implementation, the security verification information further includes a topological relationship of the first network domain and/or a routing transmission path that supports transmission through the first network domain.

In a possible implementation, the topological relationship includes at least one second network domain that has a neighbor relationship with the first network domain.

In a possible implementation, the routing transmission path that supports transmission through the first network domain includes a routing transmission path that supports transmission through the first network domain and that does not comply with a routing transmission constraint.

In a possible implementation, the second business relationship includes one or more of the following: provider to customer P2C, peer to peer P2P, sibling sibling, partial transit partial, and hybrid hybrid.

In a possible implementation, the apparatus further includes: a receiving unit, configured to obtain a simplified local internet number resource management SLURM file corresponding to the first network domain, where the SLURM file includes the security verification information. The processing unit is further configured to store the security verification information.

In a possible implementation, the SLURM file includes a first object, and the first object carries the security verification information.

In a possible implementation, the SLURM file includes a second object and a third object, and the second object and the third object jointly carry the security verification information.

In a possible implementation, the second object carries the first business relationship, and the third object carries other information in the security verification information other than the first business relationship.

In a possible implementation, the sending unit is further configured to send an information synchronization message to a second server, where the information synchronization message is used to request synchronization of information used to perform security verification on the BGP routing information; and the receiving unit is configured to receive the SLURM file that corresponds to the first network domain and that is sent by the second server.

In a possible implementation, the receiving unit included in the apparatus is further configured to receive a request message sent by the network device, where the request message is used to request the information used to perform security verification on the BGP routing information; and the sending unit is configured to send the security verification information to the network device based on the request information.

In a possible implementation, the request message includes an information type, the information type indicates the first server to return, to the network device, information that is about the information type and that is for performing security verification on the BGP routing information, and correspondingly, the security verification information includes the information about the information type.

In a possible implementation, the sending unit is configured to send a first protocol data unit PDU to the network device, where the first PDU includes the security verification information.

In a possible implementation, the first PDU includes at least one first type length value TLV field, the at least one first TLV field is used to carry the security verification information, and one first TLV field is used to carry one type of information in the security verification information.

In a possible implementation, the sending unit is configured to send a second PDU and a third PDU to the network device, where the second PDU includes the first business relationship, and the third PDU includes other information in the security verification information other than the first business relationship.

In a possible implementation, the third PDU includes at least one second TLV, the at least one second TLV is used to carry the other information, and one second TLV carries one type of information in the other information.

According to a fifth aspect, an embodiment of this application provides a device. The device includes a processor and a memory. The memory is configured to store instructions or a computer program. The processor is configured to execute the instructions or the computer program in the memory, to perform the method according to any one of the first aspect or the implementations of the first aspect, or perform the method according to any one of the second aspect or the implementations of the second aspect.

According to a sixth aspect, an embodiment of this application provides a computer-readable storage medium, including instructions or a computer program. When the instructions or the computer program is run on a computer, the computer is caused to perform the method according to any one of the first aspect or the implementations of the first aspect, or perform the method according to any one of the second aspect or the implementations of the second aspect.

According to a seventh aspect, an embodiment of this application provides a computer program product including instructions or a computer program. When the computer program product runs on a computer, the computer is caused to perform the method according to any one of the first aspect or the implementations of the first aspect, or perform the method according to any one of the second aspect or the implementations of the second aspect.

According to an eighth aspect, an embodiment of this application provides a communication system. The communication system includes a network device that performs the method according to any one of the first aspect or the implementations of the first aspect and a controller that performs the method according to any one of the second aspect or the implementations of the second aspect.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that, the accompanying drawings in the following descriptions show only some embodiments in this application, and a person of ordinary skill in the art may still derive other drawings from these accompanying drawings without creative efforts.
FIG. 1a is a diagram of an example network architecture according to an embodiment of this application;
FIG. 1b is a diagram of a structure of a PDU according to an embodiment of this application;
FIG. 2a is a diagram of an example application scenario according to an embodiment of this application;
FIG. 2b is a diagram of another example application scenario according to an embodiment of this application;
FIG. 2c is a diagram of another example application scenario according to an embodiment of this application;
FIG. 2d is a diagram of another example application scenario according to an embodiment of this application;
FIG. 2e is a diagram of still another example application scenario according to an embodiment of this application;
FIG. 2f is a diagram of still another example application scenario according to an embodiment of this application;
FIG. 3 is a diagram of signaling interaction of an information processing method according to an embodiment of this application;
FIG. 4a is a diagram of a structure of a first PDU according to an embodiment of this application;
FIG. 4b is a diagram of a structure of a third PDU according to an embodiment of this application;
FIG. 5 is a diagram of a structure of an information processing apparatus according to an embodiment of this application;
FIG. 6 is a diagram of a structure of another information processing apparatus according to an embodiment of this application; and
FIG. 7 is a diagram of a structure of a device according to an embodiment of this application.

### DESCRIPTION OF EMBODIMENTS

The Embodiments of this application provide an information processing method and apparatus, to improve accuracy of a verification result obtained by performing security verification on BGP routing information by a network device.

A BGP route attack is an attack method frequently used by attackers. The BGP route attack is used to achieve attack objectives such as traffic eavesdropping and sending attack packets to maliciously occupy network resources.

To reduce BGP route attacks, security verification may be performed on a BGP route by using an autonomous system (autonomous system, AS) path (path) included in the BGP routing information. The AS path indicates an AS path that the BGP route passes through during transmission. Based on the AS path, ASs that the BGP route passes through in sequence during transmission may be determined. Specifically, during transmission of the BGP route, a routing transmission constraint needs to be met. The routing transmission constraint mentioned herein may be a valley-free (Valley-Free) principle. The valley-free principle specifies conditions that business relationships used during transmission of the BGP route need to meet.

The business relationships mentioned in embodiments of this application may include P2C, P2P, C2P, sibling, partial, and hybrid.

Sibling is a special business relationship. When a business relationship between two network domains is sibling, the two network domains are providers of each other. In an example, when a business relationship between a network domain 1 and a network domain 2 is sibling, BGP routing information received by the network domain 1 by using any business relationship may continue to be transmitted to the network domain 2.

Partial is also a special business relationship. A BGP route received by a network device from a neighbor that has a partial business relationship with the network device can be transmitted to a customer or peer of the network device, but cannot be transmitted to a provider of the network device. A business relationship between network devices is a business relationship between network domains to which the network devices belong. For example, if a network device 1 belongs to the network domain 1, and a network device 2 belongs to the network domain 2, a business relationship between the network device 1 and the network device 2 is the business relationship between the network domain 1 and the network domain 2.

Hybrid is also a special business relationship. Two network domains with a hybrid relationship have different business relationships in different geographical locations. For example, in a region 1, the network domain 1 is a provider of the network domain 2, and in a region 2, the network domain 2 is a provider of the network domain 1.

In a scenario in which a routing server participates in BGP route transmission, C2P may alternatively be client to routing server, and P2C may be routing server to client.

For the business relationships, refer to related descriptions in request for comments (request for comments, RFC) 7908, RFC9234, and "https://datatracker.ietf.org/doc/html/draft-shen-sidrops-regionalized-as-relationships-02". This is not described in detail herein.

As the name implies, the "valley"-free principle may be understood as that no "valley" can appear in a transmission path that the BGP routing information passes through during transmission. Specifically, when transmission of the BGP routing information is performed by using C2P, the transmission path of the BGP routing information includes an upstream path (upstream path), and the upstream path may be similar to an uphill. When transmission of the BGP routing information is performed by using P2C, the transmission path of the BGP routing information includes a downstream path (downstream path), and the downstream path may be similar to a downhill. When transmission of the BGP route is performed by using P2P, the transmission path of the BGP route may be similar to a flat road.

Therefore, in an example, the valley-free principle may include, for example, a route transmission principle shown in the following Table 1:

**Table 1**

| | To customer | To peer | To provider |
|---|---|---|---|
| From customer | Allowed | Allowed | Allowed |
| From peer | Allowed | Not allowed | Not allowed |
| From provider | Allowed | Not allowed | Not allowed |
| From sibling | Allowed | Allowed | Allowed |
| From partial | Allowed | Allowed | Not allowed |

It can be learned from Table 1 that, the valley-free principle may include the following five constraints:
1. BGP routing information received by the network device from a customer network domain of a network domain to which the network device belongs can be transmitted to the customer network domain, a peer network domain, and a provider network domain of the network domain to which the network device belongs. The BGP routing information received by the network device from the customer network domain of the network domain to which the network device belongs may also be understood as BGP routine information received by the network device by using the C2P business relationship. In other words, the BGP routing information received by the network device by using the C2P business relationship can continue to be transmitted by using the P2C business relationship, the P2P business relationship, and the C2P business relationship.
2. BGP routing information received by the network device from the peer network domain of the network domain to which the network device belongs can be transmitted only to the customer network domain of the network domain to which the network device belongs. The BGP routing information received by the network device from the peer network domain of the network domain to which the network device belongs may be understood as BGP routing information received by the network device by using the P2P business relationship. In other words, the BGP routing information received by the network device by using the P2P business relationship can be transmitted only by using the P2C business relationship.
3. BGP routing information received by the network device from the provider network domain of the network domain to which the network device belongs can be transmitted only to the customer network domain of the network domain to which the network device belongs. The BGP routing information received by the network device from the provider network domain of the network domain to which the network device belongs may also be understood as BGP routing information received by the network device by using the C2P business relationship. In other words, the BGP routing information received by the network device by using the P2C business relationship can be transmitted only by using the P2C business relationship.
4. BGP routing information received by the network device from a sibling network domain of the network domain to which the network device belongs can be transmitted to the customer network domain, the peer network domain, and the provider network domain of the network domain to which the network device belongs. The BGP routing information received by the network device from the sibling network domain of the network domain to which the network device belongs may also be understood as BGP routing information received by the network device by using the sibling network domain business relationship. In other words, the BGP routing information received by the network device by using the sibling business relationship can continue to be transmitted by using the P2C business relationship, the P2P business relationship, and the C2P business relationship.
5. BGP routing information received by the network device from a partial network domain of the network domain to which the network device belongs can be transmitted only to the customer network domain and the peer network domain of the network domain to which the network device belongs. The BGP routing information received by the network device from the partial network domain of the network domain to which the network device belongs may also be understood as BGP routing information received by the network device by using the partial business relationship. In other words, the BGP route received by the network device by using the partial business relationship can continue to be transmitted by using the P2C business relationship and the P2P business relationship.

Currently, when performing security verification on the BGP routing information, the network device may perform security verification with reference to a first business relationship corresponding to the network domain, where the first business relationship is C2P. In a specific example, the network device may obtain a first business relationship of a first network domain, to be specific, determine provider network domains of the first network domain, and then perform security verification on the AS path in the BGP routing information based on the first business relationship of the first network domain, to determine whether the business relationship used during transmission of the BGP routing information meets the foregoing valley-free principle, so as to obtain a verification result of performing security verification on the BGP routing information.

In an example, once a business relationship other than C2P is used during transmission of the BGP routing information, it may be considered that the BGP routing information is reversed. For example, if the business relationship used for the BGP routing information is changed from C2P to P2C, the BGP routing information is reversed. For another example, if the business relationship used for the BGP routing information is changed from C2P to P2P, the BGP routing information is reversed. For still another example, if the business relationship used when transmission of the BGP routing information starts is P2C or P2P, the BGP routing information is reversed. Once the BGP routing information is reversed, transmission of the BGP routing information can only be performed by using P2C. This is because once transmission of the BGP routing information is performed by using another business relationship, "valley" appears in the transmission path that the BGP routing information passes through during transmission, and this violates the valley-free principle.

The network domain mentioned in embodiments of this application may be an AS.

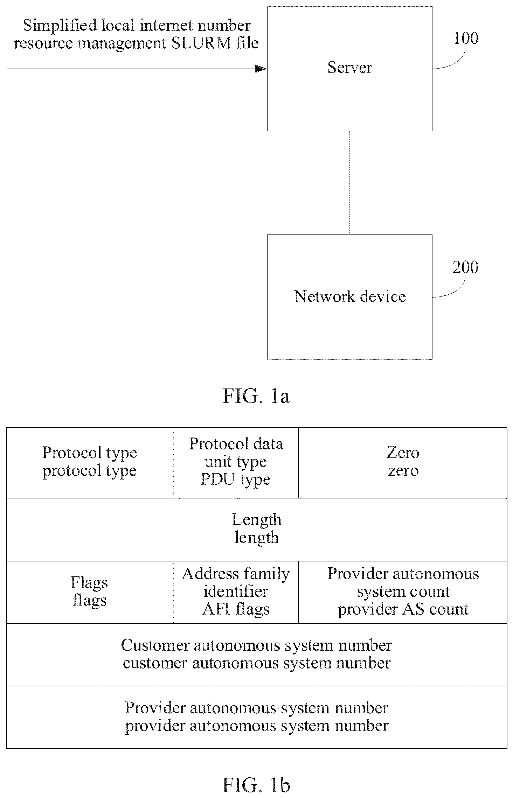

In an example, refer to FIG. 1a for understanding. FIG. 1a is a diagram of an example network architecture according to an embodiment of this application. A first business relationship corresponding to a network domain may be registered with a server 100. After obtaining the first business relationship corresponding to the network domain, the server 100 may store the first business relationship, and deliver the first business relationship to a network device 200, so that the network device 200 verifies BGP routing information based on the first business relationship. In an example, the server 100 may be a relying party (relay party, RP) server. In an example, the network device 200 may be a boundary device in the network domain. For example, the network device 200 may be an autonomous system boundary router (autonomous system boundary router, ASBR).

In an example, the first business relationship corresponding to the network domain may be registered with the server 100 by using SLURM. The SLURM is a mechanism for operating registration data on the server 100.

It should be noted that the SLURM may not only be used to register the first business relationship corresponding to the network domain, but also be used to operate other data. This is not described in detail herein.

The following describes, with reference to a format of a SLURM file, the first business relationship of the network domain registered by using the SLURM.

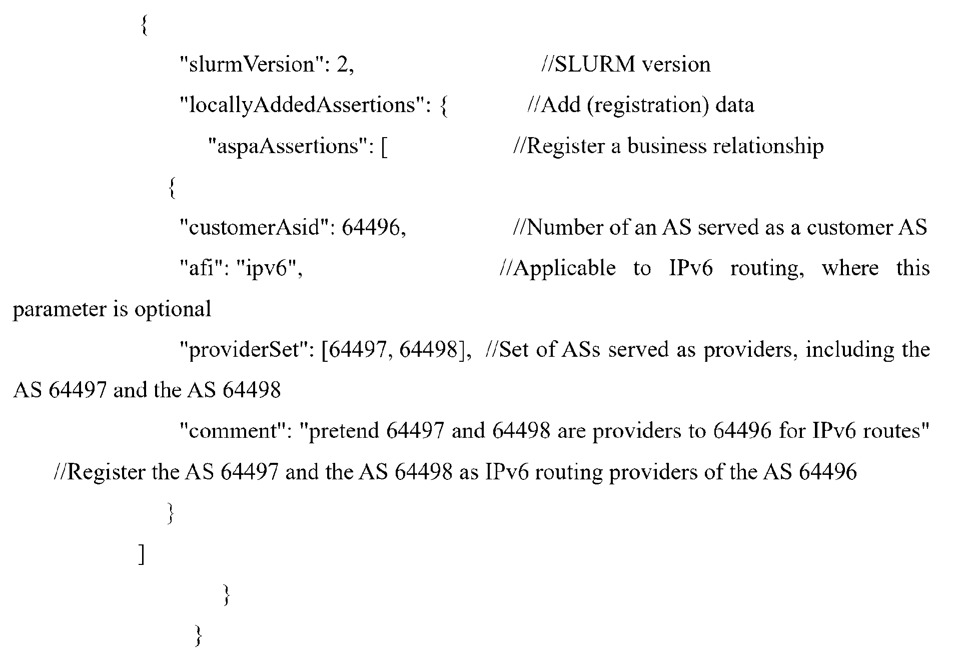

In the foregoing example, content after the character "//" is a comment.

In an example, the server 100 may send, to the network device 200 by using a resource public key infrastructure to router protocol (Resource Public Key Infrastructure to Router Protocol, RTR), the first business relationship registered by the network domain.

The RTR protocol supports a plurality of types of packets. In embodiments of this application, an RTR protocol-based packet is referred to as a PDU. Each PDU has a corresponding type, and a value of a type corresponding to a PDU used to carry the first business relationship is 11. The following describes, with reference to FIG. 1b, a format of the PDU used to carry the first business relationship.

FIG. 1b is a diagram of a structure of a PDU according to an embodiment of this application.

As shown in FIG. 1b, the PDU includes a protocol version (Protocol Version) field, a PDU type field, a zero (zero) field, a length field, a flags (flags) field, an address family identifier (address family identifier, AFI) flags field, a provider AS count (count) field, a customer autonomous system number field, and a provider autonomous system numbers field.

The protocol version field is used to carry an RTR protocol version number.

The PDU type field is used to carry a type of the PDU, and a value of the field may be 11.

The zero field is an all-zero field.

The length field is used to carry a length of the PDU, and indicates a byte length of the entire PDU including the length field.

The flags field has 8 bits (bit) in total. A least significant bit indicates whether the PDU is an announcement (announcement) PDU or a withdrawal (withdraw) PDU.

The AFI flags field has 8 bits in total. A least significant bit indicates whether business relationship information is for ipv4 or ipv6.

The provider AS count field is used to carry a quantity of ASs that are registered as providers.

The customer autonomous system number field is used to carry a number of an AS served as a customer AS, namely, an AS number of an AS that registers the first business relationship.

The provider autonomous system numbers field is used to carry numbers of all ASs that are registered as providers.

It should be noted that FIG. 1a is shown merely for ease of understanding this solution, and does not constitute a limitation on embodiments of this application. Although FIG. 1a shows only one server and one network device, during actual application, a quantity of servers that can be configured to register the first business relationship is not limited to 1 shown in FIG. 1a. In addition, one server may send the first business relationship to a plurality of network devices. For example, in addition to sending the first business relationship to the network device 200, the server 100 may further send the first business relationship to another network device.

In an example, when security verification is performed on the AS path based on the first business relationship, a verification process may include upstream verification and downstream verification. In a specific example, if the network device receives the BGP routing information by using the C2P business relationship, upstream verification is performed; if the network device receives the BGP routing information by using the P2C business relationship, downstream verification is performed. During upstream verification, if any segment of transmission path in the AS path is C2P, that is, the uphill, the verification succeeds; otherwise, the verification fails. During downstream verification, a transmission path indicated by the AS path may include a segment of uphill and a segment of downhill. If a length of the uphill and the downhill is equal to a length of the transmission path indicated by the entire AS path, the verification succeeds; otherwise, the verification fails. For details about the upstream verification and downstream verification, refer to related descriptions in "BGP AS_PATH Verification Based on Autonomous System Provider Authorization (ASPA) Objects". Details are not described herein.

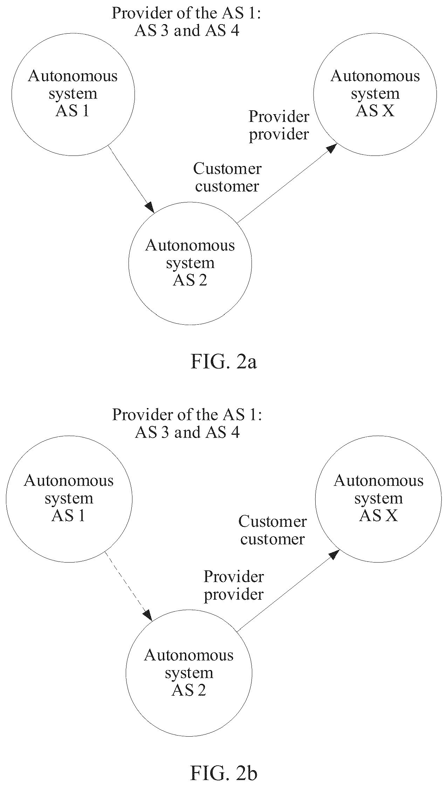

Currently, when the network device performs security verification on the AS path based on the first business relationship, an obtained verification result may be inaccurate. For example, whether the transmission path that the BGP routing information passes through during transmission complies with the valley-free principle cannot be determined. For another example, when it is determined that the transmission path that the BGP routing information passes through during transmission does not comply with the valley-free principle, path hijacking and path leakage cannot be distinguished. Descriptions are provided with reference to FIG. 2a to FIG. 2f.

FIG. 2a is a diagram of an example application scenario according to an embodiment of this application.

As shown in FIG. 2a, an AS X receives BGP routing information from an AS 2. An AS path corresponding to the BGP routing information is [AS 1, AS 2]. The AS X is a provider of the AS 2. Therefore, after receiving the BGP routing information from the AS 2, a network device (for example, a boundary device) in the AS X may perform upstream verification on the AS path [AS 1, AS 2], and determine, based on a first business relationship of the AS 1, that an AS 3 and an AS 4 are providers of the AS 1, and the AS 2 is not a provider of the AS 1. Therefore, the network device in the AS X may determine that the BGP routing information fails to pass security verification. However, the network device in the AS X cannot determine whether path leakage or path hijacking occurs on the BGP routing information.

FIG. 2b is a diagram of another example application scenario according to an embodiment of this application.

As shown in FIG. 2b, there is no real link between an AS 1 and an AS 2, or there is no neighbor relationship between the AS 1 and the AS 2. An AS X receives BGP routing information from the AS 2. An AS path corresponding to the BGP routing information is [AS 1, AS 2]. The AS 2 is a provider of the AS X. Therefore, after receiving the BGP routing information from the AS 2, a network device (for example, a boundary device) in the AS X may perform downstream verification on the AS path [AS 1, AS 2].

When performing downstream verification, the network device in the AS X determines, based on a first business relationship of the AS 1, that an AS 3 and an AS 4 are providers of the AS 1, and the AS 2 is not a provider of the AS 1, but cannot determine whether there is another business relationship between the AS 1 and the AS 2. Therefore, the network device in the AS X may determine the AS 1 as an uphill segment, and determine the AS 2 as a downhill segment. Because the uphill segment and the downhill segment cover the entire AS path [AS 1, AS 2], the network device in the AS X may determine that the BGP routing information passes security verification. However, this verification result is actually inaccurate, because the AS 1 and the AS 2 do not have a neighbor relationship, and path hijacking actually occurs on the BGP routing information.

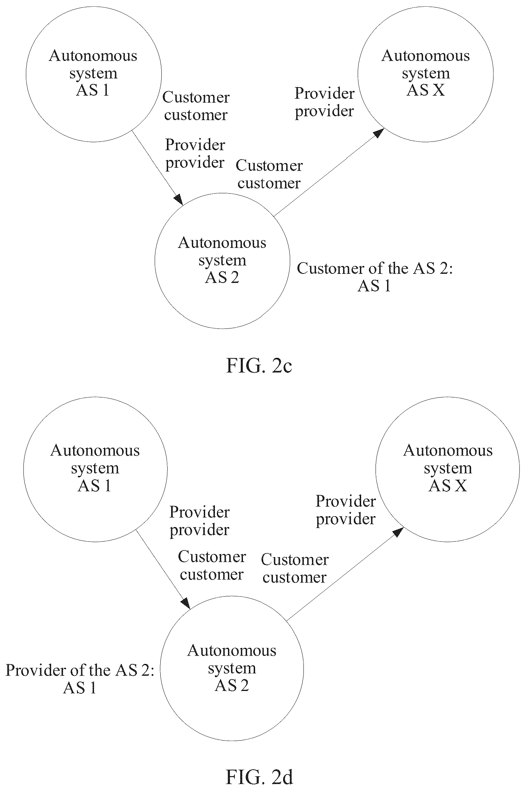

FIG. 2c is a diagram of another example application scenario according to an embodiment of this application.

As shown in FIG. 2c, an AS X receives BGP routing information from an AS 2. An AS path corresponding to the BGP routing information is [AS 1, AS 2]. The AS 2 is a customer of the AS X. Therefore, after receiving the BGP routing information from the AS 2, a network device (for example, a boundary device) in the AS X may perform upstream verification on the AS path [AS 1, AS 2]. The network device in the AS X does not obtain a first business relationship of the AS 1. In addition, the network device determines, based on a first business relationship of the AS 2, that the AS 1 is not a provider of the AS 2, but cannot determine whether there is another business relationship between the AS 1 and the AS 2. Therefore, a verification result obtained by performing upstream verification by the network device in the AS X is "unknown (unknown)".

FIG. 2d is a diagram of another example application scenario according to an embodiment of this application.

As shown in FIG. 2d, an AS X receives BGP routing information from an AS 2. An AS path corresponding to the BGP routing information is [AS 1, AS 2]. The AS 2 is a customer of the AS X. Therefore, after receiving the BGP routing information from the AS 2, a network device (for example, a boundary device) in the AS X may perform upstream verification on the AS path [AS 1, AS 2]. The network device in the AS X determines, based on a first business relationship of the AS 2, that the AS 1 is a provider of the AS 2. Therefore, the network device in the AS X determines that the BGP routing information is invalid because the BGP routing information received by the AS 2 by using a P2C business relationship continues to be transmitted to the AS X by using a C2P business relationship. This violates a valley-free principle.

However, in some special scenarios, transmission of the BGP routing information is allowed to be performed through a valley path. For example, in the scenario shown in FIG. 2d, the AS 2 is allowed to continue to transmit the BGP routing information from the AS 1 to the AS X. However, in this case, in a conventional security verification manner, the valid valley transmission path is determined as an invalid transmission path, and therefore it is determined that the BGP routing information is invalid. Consequently, service traffic transmission is abnormal.

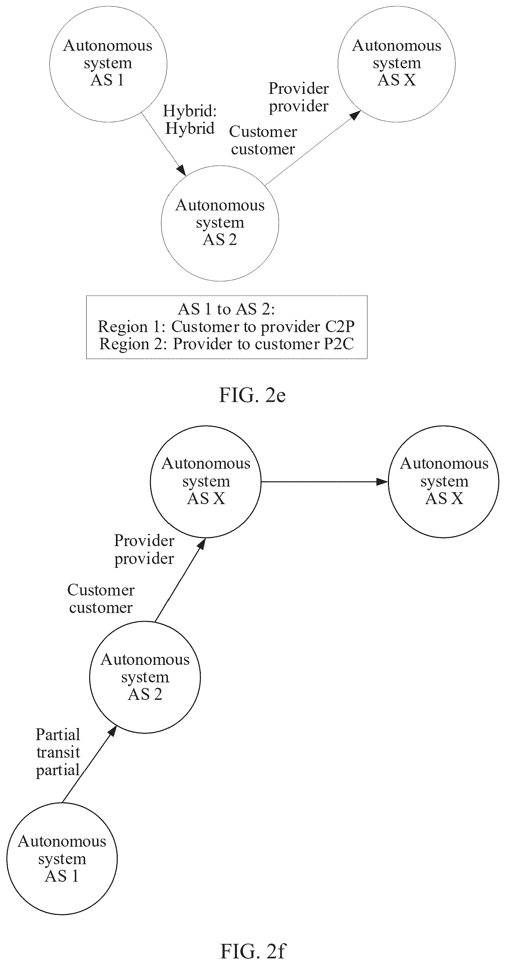

FIG. 2e is a diagram of still another example application scenario according to an embodiment of this application.

As shown in FIG. 2e, an AS X is a provider of an AS 2. The AS X receives BGP routing information from the AS 2. An AS path corresponding to the BGP routing information is [AS 1, AS 2]. A business relationship between the AS 1 and the AS 2 is hybrid. For example, in a region 1, the business relationship between the AS 1 and the AS 2 is C2P, to be specific, the AS 2 is a provider of the AS 1. In a region 1, the business relationship between the AS 1 and the AS 2 is P2C, to be specific, the AS 1 is a provider of the AS 2. However, currently, a network device does not support performing security verification on the AS path based on the hybrid business relationship. As a result, when performing security verification on the AS path [AS 1, AS 2], the network device in the AS X cannot obtain an accurate verification result.

FIG. 2f is a diagram of still another example application scenario according to an embodiment of this application.

As shown in FIG. 2f, an AS 1 transmits BGP routing information to an AS 2, the AS 2 transmits the BGP routing information to an AS 3, and the AS 3 further transmits the BGP routing information to an AS X. The AS X receives the BGP routing information from the AS 3. An AS path corresponding to the BGP routing information is [AS 1, AS 2, AS 3]. A business relationship between the AS 1 and the AS 2 is partial, and a business relationship between the AS 2 and the AS 3 is C2P. Therefore, the BGP routing information is actually invalid because the BGP routing information received by using the partial business relationship cannot continue to be transmitted by using the C2P business relationship. However, currently, a network device does not support performing security verification on the AS path based on the partial business relationship. As a result, when performing security verification on the AS path [AS 1, AS 2, AS 3], the network device in the AS X cannot obtain an accurate verification result. In an example, when performing security verification, the network device in the AS X determines, based on a first business relationship of the AS 1, that the AS 2 is not a provider of the AS 1, but cannot determine whether there is another business relationship between the AS 1 and the AS 2. Therefore, the network device in the AS X may determine that a verification result of the BGP routing information is unknown. In another example, when the AS 1 registers the business relationship between the AS 1 and the AS 2, the AS 1 registers the AS 2 as a provider of the AS 1. In this case, when performing security verification, the network device in the AS X determines, based on the first business relationship of the AS 1, that the AS 2 is a provider of the AS 1. Therefore, the network device in the AS X may determine that the BGP routing information passes the security verification.

To improve accuracy of a verification result obtained by performing security verification on BGP routing information by a network device, embodiments of this application provide an information processing method and apparatus. The following describes, with reference to the accompanying drawings, the information processing method and apparatus provided in embodiments of this application.

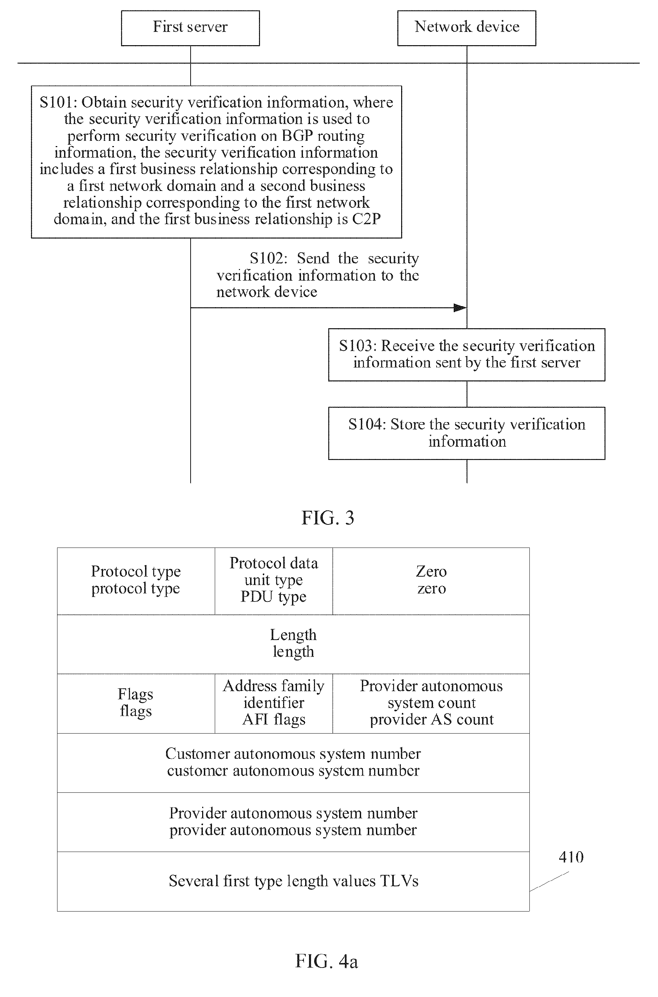

FIG. 3 is a diagram of signaling interaction of an information processing method according to an embodiment of this application. The method shown in FIG. 3 may include, for example, the following S101 to S104.

A first server in the method shown in FIG. 3 may, for example, correspond to the server 100 shown in FIG. 1a, and a network device in the method shown in FIG. 3 may, for example, correspond to the network device 200 shown in FIG. 1a.

S101: The first server obtains security verification information, where the security verification information is used to perform security verification on BGP routing information, the security verification information includes a first business relationship corresponding to a first network domain and a second business relationship corresponding to the first network domain, and the first business relationship is C2P.

In this embodiment of this application, in addition to the first business relationship, the security verification information may further include the second business relationship different from the first business relationship. The second business relationship may include one or more of P2C, P2P, sibling, partial, and hybrid. In this way, security verification is performed on the BGP routing information based on the security verification information with reference to both the first business relationship of the first network domain and the second business relationship of the first network domain, so that a verification result is more accurate. For the P2C business relationship, the P2P business relationship, the sibling business relationship, the partial business relationship, and the hybrid business relationship, refer to the foregoing related descriptions. Details are not described herein again.

In an example, when the BGP routing information is verified, especially when it is determined whether path hijacking exists, if a topological relationship of a network domain can be learned, a possibility of identifying path hijacking can be effectively increased. For example, in the scenario shown in FIG. 2b, if a topological relationship of the AS 1 can be obtained, it may be determined that the AS 1 and the AS 2 do not have a neighbor relationship, to determine that path hijacking occurs. Therefore, in an example, the security verification information may further include a topological relationship of the first network domain. In this embodiment of this application, the topological relationship of the first network domain may include, for example, another network domain that can directly or indirectly communicate with the first network domain. In an example, considering that a possibility of identifying path hijacking can be effectively increased based on a neighbor relationship between network domains, the topological relationship of the first network domain may be at least one second network domain that has a neighbor relationship with the first network domain.

In an example, to further improve accuracy of performing security verification on a BGP route, the security verification information may further include a routing transmission path that supports transmission through the first network domain. In this way, when security verification is performed on the BGP routing information, security verification may be performed with reference to the routing transmission path that supports transmission through the first network domain.

In an example, the routing transmission path that supports transmission through the first network domain may be a part of paths that comply with a routing transmission constraint. For example, for service routing, based on a service requirement, a part of paths may be specified as the routing transmission path that supports transmission through the first network domain.

In another example, it is considered that although BGP route transmission needs to generally comply with the routing transmission constraint, in some special scenarios, transmission of the BGP routing information is allowed to be performed through a valley path. To avoid a case in which the BGP routing information of which transmission is performed through a valid "valley path" fails to pass security verification, in an example, the foregoing routing transmission path that supports transmission through the first network domain may be a routing transmission path that does not comply with the routing transmission constraint. In other words, the foregoing routing transmission path that supports transmission through the first network domain may be a "valley path".

In an example, the first server may obtain the prestored security verification information. The security verification information may be locally stored in the first server, or may be stored in an external storage device connected to the first server. This is not specifically limited in embodiments of this application.

In an example, the first server may obtain a file including the security verification information, parse the file to obtain the security verification information, and further store the security verification information. A format of the file is not specifically limited in embodiments of this application. The format of the file may be a javascript object notation (javascript object notation, JSON), may be an extensible markup language (extensible markup language, XML), or may be yet another markup language (yet another markup language, YAML). In this embodiment of this application, an example in which the file is a file in the JSON format is used for description. In this case, the file may be a SLURM file. In other words, in an example, the first server may obtain the security verification information by using the SLURM file, and store the security verification information.

In a specific example, the SLURM file may be uploaded by a user to the first server. In another example, it is considered that there are a large quantity of servers that can be used for registration of information for performing security verification on the BGP routing information. To synchronize registered information on the servers, the first server may obtain the SLURM file from a second server. In a specific example, the first server may send an information synchronization message to the second server, where the information synchronization message is used to request synchronization of the information used to perform security verification on the BGP routing information. After receiving the information synchronization message, the second server may obtain the locally stored SLURM file, and send the SLURM file to the first server. In an example, the second server may send, to the first server, the SLURM file uploaded by the user to the second server in a specific time period (for example, a recent day). A protocol used for interaction between the first server and the second server is not specifically limited in embodiments of this application. In an example, the first server and the second server may communicate by using a hypertext transfer protocol secure (Hypertext Transfer Protocol Secure, HTTPS) protocol. In other words, the first server may send the information synchronization message to the second server by using the HTTP, and correspondingly, the second server may send the SLURM file to the first server by using the HTTP.

In an example, the SLURM file may include a first object, and the first object may be used to carry all information in the security verification information. In an example, the first object corresponds to aspaAssertions mentioned above. "aspaAssertions" is an object name of the first object. The first object is described by using an example in which the security verification information includes the first business relationship, the second business relationship, the at least one second network domain that has a neighbor relationship with the first network domain, and the valley path that supports transmission through the first network domain.

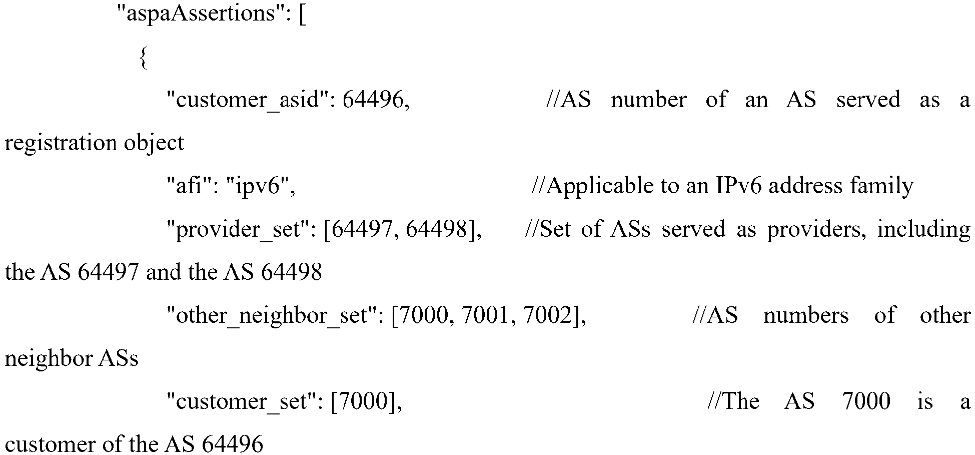

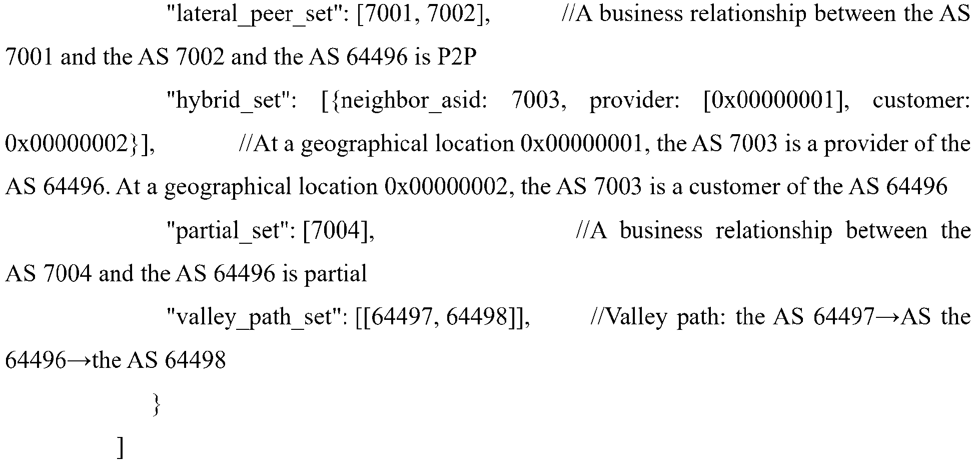

In the foregoing descriptions of the first object, content after the character "//" is a comment.

In another example, the SLURM file may include a second object and a third object, and the second object and the third object are jointly used to carry the security verification information. In other words, the second object and the third object may respectively carry a part of information in the security verification information.

In an example, the second object may be used to carry business relationship information in the security verification information, where the business relationship information includes the first business relationship and the second business relationship. The third object may be used to carry other information in the security verification information other than the business relationship information.

In another example, the second object may be used to carry the first business relationship, and the third object may be used to carry other information in the security verification information other than the first business relationship. In this case, the second object may be the same as aspaAssertions in the conventional technology. In this manner, the object aspaAssertions does not need to be extended or modified. The third object is described by using an example in which the security verification information includes the first business relationship, the second business relationship, the at least one second network domain that has a neighbor relationship with the first network domain, and the valley path that supports transmission through the first network domain.

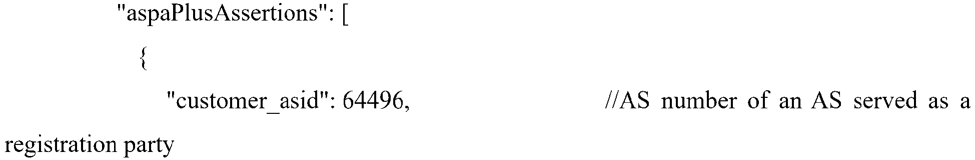

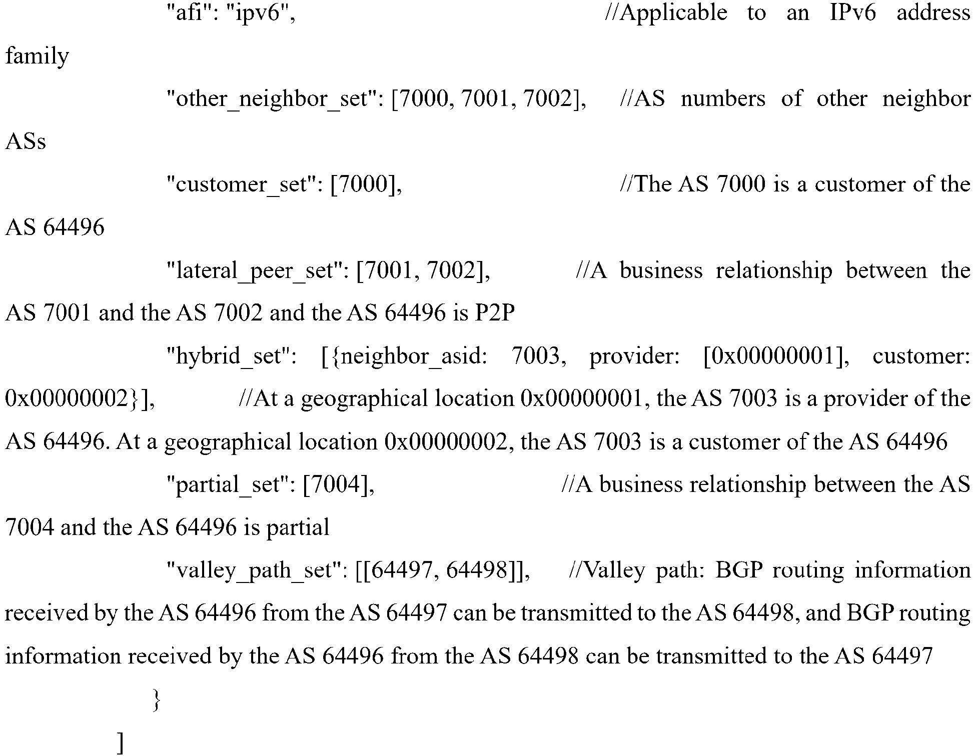

S102: The first server sends the security verification information to the network device.

After obtaining the security verification information, the first server may send the security verification information to the network device. In an example, the first server may actively send the security verification information to the network device. In another example, the first server may send the security verification information to the network device based on a request message sent by the network device, where the request message is used to request the information used to perform security verification on the BGP routing information. In this case, before performing S102, the first server may further receive the request message sent by the network device.

In an example, the network device may request, from the first server as required, information needed by the network device. In this case, the request message may include an information type, and the information type indicates a type of information that is needed by the network device and that is used to perform security verification on the BGP routing information. In other words, the information type indicates the first server to return, to the network device, information that is about the information type and that is for performing security verification on the BGP routing information. For example, if the network device needs business relationship information, the information type may include a business relationship. For another example, if the network device needs topological information, the information type may include a topological relationship. For another example, if the network device needs valley path information, the information type may include a valley path. Correspondingly, after receiving the request message, the first server may parse the request message to obtain the information type. Further, the first server may obtain the information that is about the information type and that is for performing security verification on the BGP routing information, and send the obtained security verification information to the network device.

In an example, during a specific implementation of S102, the first server may send a first PDU to the network device, where the first PDU includes the security verification information. In other words, the first server may send the security verification information to the network device by using one PDU.

In an example, the first PDU may include at least one first TLV field, the at least one first TLV field is used to carry the security verification information, and one first TLV field is used to carry one type of information in the security verification information. For example, the security verification information includes the first business relationship of the first network domain, the second business relationship of the first network domain, the topological relationship of the first network domain, and the valley path that supports transmission through the first network domain. It is assumed that the second business relationship includes P2C, P2P, sibling, partial, and hybrid. In this case, the first PDU may include eight first TLVs, which are respectively a first TLV corresponding to the first business relationship, a first TLV corresponding to P2C, a first TLV corresponding to P2P, a first TLV corresponding to sibling, a first TLV corresponding to partial, a first TLV corresponding to hybrid, a first TLV corresponding to the topological relationship, and a first TLV corresponding to the valley path.

In an example, a value field of the first TLV corresponding to P2C is used to carry a customer AS set of the first network domain, the customer AS set includes a number of at least one customer AS, and a length field of the first TLV corresponding to P2C is used to carry a quantity of customer ASs included in the customer AS set.

In an example, a value field of the first TLV corresponding to sibling is used to carry a sibling AS set of the first network domain, the sibling AS set includes a number of at least one sibling AS, and a length field of the first TLV corresponding to sibling is used to carry a quantity of sibling ASs included in the sibling AS set.

In an example, a value field of the first TLV corresponding to partial is used to carry a partial AS set of the first network domain, the partial AS set includes a number of at least one partial AS, and a length field of the first TLV corresponding to partial is used to carry a quantity of partial ASs included in the partial AS set.

In an example, the first TLV corresponding to hybrid may include at least one LV field, and an LV field is used to carry information about a network domain that has a hybrid business relationship with the first network domain. For example, if a business relationship between a third network domain and the first network domain is hybrid, and a business relationship between a fourth network domain and the first network domain is also hybrid, the first TLV corresponding to hybrid may include two LV fields, where one LV field is used to carry the business relationship between the third network domain and the first network domain, and the other LV field is used to carry the business relationship between the fourth network domain and the first network domain.

In an example, a value field of the first TLV corresponding to the topological relationship is, for example, used to carry a neighbor AS set of the first network domain, the neighbor AS set includes a number of at least one neighbor AS, and a length field of the first TLV corresponding to the topological relationship is used to carry a quantity of neighbor ASs included in the neighbor AS set.

In an example, the first TLV corresponding to the valley path may include at least one LV field, and one LV field is used for one valley path on which transmission is allowed to be performed through the first network domain.

In an example, a structure of the first PDU may be shown in FIG. 4a. FIG. 4a is a diagram of a structure of a first PDU according to an embodiment of this application. The PDU shown in FIG. 4a is obtained by extending the PDU shown in FIG. 1b with several first TLVs 410, and is used to carry other information in the security verification information other than the first business relationship.

In another example, during a specific implementation of S 102, the first server may send a second PDU and a third PDU to the network device, where the second PDU includes the first business relationship, and the third PDU includes other information in the security verification information other than the first business relationship. In this case, a format of a PDU of the first business relationship sent by the server to the network device in the conventional technology may be reused for a format of the second PDU. In an example, for the format of the second PDU, refer to FIG. 1b.

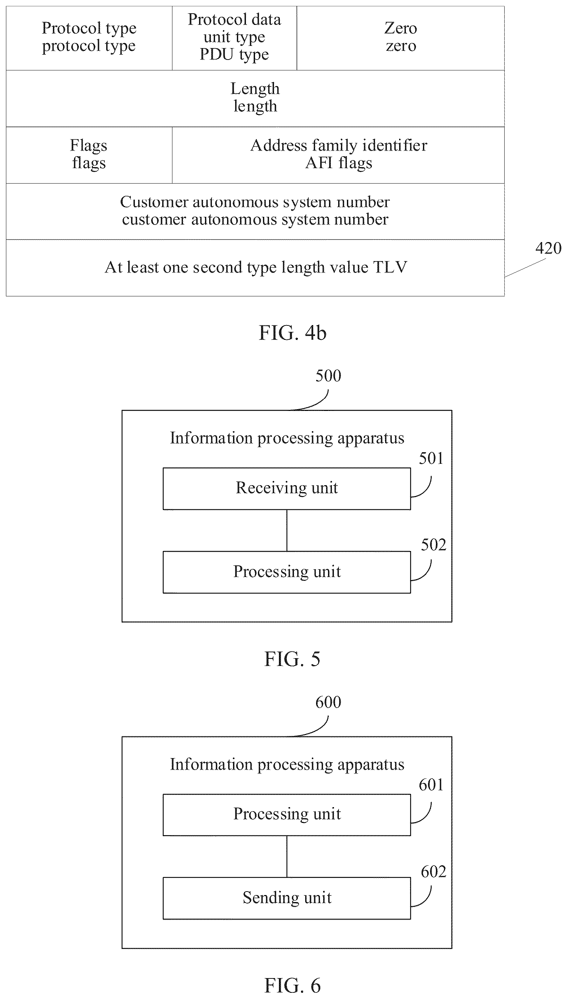

In an example, the third PDU may include at least one second TLV, the at least one second TLV is used to carry the other information, and one second TLV carries one type of information in the other information. In an example, a format of the third PDU may be shown in FIG. 4b. FIG. 4b is a diagram of a structure of a third PDU according to an embodiment of this application. As shown in FIG. 4b, the third PDU includes at least one second TLV field 420, which is used to carry the other information, and each second TLV field may be used to carry one type of information in the other information. For the second TLV, refer to the foregoing descriptions of the first TLV field. Details are not described herein again. For another field in the third TLV other than the second TLV field, refer to the foregoing descriptions of FIG. 1b. Details are not described herein again. It should be noted herein that a value of a PDU type field of the third PDU shown in FIG. 4b is different from a value of a PDU type field of the second PDU.

S103: The network device receives the security verification information sent by the first server.

S104: The network device stores the security verification information.

After the first server sends the security verification information to the network device, the network device may receive and store the security verification information sent by the first server, to subsequently perform security verification on the BGP routing information based on the security verification information.

In an example, the network device may locally store the security verification information in the network device.

In an example, the network device may further obtain first BGP routing information. For example, the network device may receive the first BGP routing information from another network device. After obtaining the first BGP routing information, the network device may perform security verification on the first BGP routing information based on the security verification information. In an example, the first BGP routing information may include a first AS path, and the first AS path indicates ASs that the first BGP routing information passes through in sequence during transmission. In other words, the first AS path indicates a transmission path of the first BGP routing information.

In this embodiment of this application, the network device may determine, based on the security verification information, whether the first BGP routing information complies with the routing transmission constraint. In a specific example, the network device may determine, based on the first business relationship and the second business relationship, whether the first BGP routing information complies with the routing transmission constraint. In an example, the network device may determine, based on a business relationship corresponding to each segment of transmission path in the first AS path, whether the first BGP routing information complies with the routing transmission constraint. In another example, the network device may perform upstream verification or downstream verification by using the first business relationship and the second business relationship, to determine whether the first BGP routing information complies with the routing transmission constraint. Examples are provided for description with reference to specific scenarios.

In the scenario shown in FIG. 2a, if the network device in the AS X determines, based on a second business relationship of the AS 1, that there is no business relationship between the AS 1 and the AS 2, it indicates that the AS 1 and the AS 2 are not neighbors. Therefore, the network device in the AS X may determine that path hijacking occurs. If the network device in the AS X determines, based on a second business relationship between the AS 1 and the AS 2, that the AS 1 is a provider of the AS 2, the network device in the AS X may determine that path leakage occurs.

In the scenario shown in FIG. 2b, the network device in the AS X may determine, based on a second business relationship of the AS 1, that there is no business relationship between the AS 1 and the AS 2, in other words, the AS 1 and the AS 2 are not neighbors. Therefore, the network device in the AS X may determine that path hijacking occurs.

In the scenario shown in FIG. 2c, the network device in the AS X may determine, based on a second business relationship of the AS 2, that the AS 1 is a customer of the AS 2. Therefore, when performing upstream verification, the network device in the AS X determines that the verification succeeds.

In the scenario shown in FIG. 2e, in the region 1, a business relationship between the AS 1 and the AS 2 is C2P. Therefore, when performing upstream verification, the network device in the AS X determines that the verification succeeds. In the region 2, a business relationship between the AS 1 and the AS 2 is C2P. Therefore, when performing upstream verification, the network device in the AS X determines that the verification fails.

In the scenario shown in FIG. 2f, because a second business relationship between the AS 1 and the AS 2 is partial, BGP routing information received by the AS 2 from the AS 1 cannot continue to be transmitted by using the C2P business relationship, and the AS 3 is a provider of the AS 2. Therefore, the network device in the AS X can accurately determine that path leakage occurs.

In an example, if the security verification information further includes the topological relationship corresponding to the first network domain, the network device may further determine, with reference to the topological relationship, whether the first BGP routing information complies with the routing transmission constraint. In a specific example, whether path hijacking or path leakage occurs on the first BGP routing information may be further determined with reference to the topological relationship. Examples are provided for description with reference to specific scenarios.

In the scenario shown in FIG. 2a, if the network device in the AS X determines, based on a second business relationship of the AS 1, that there is no business relationship between the AS 1 and the AS 2, and further verifies, based on a topological relationship of the AS 1, that the AS 1 and the AS 2 are not neighbors, the network device in the AS X may determine that path hijacking occurs.

In the scenario shown in FIG. 2b, the network device in the AS X may determine, based on a second business relationship of the AS 1, that there is no business relationship between the AS 1 and the AS 2, and further verify, based on a topological relationship of the AS 1, that the AS 1 and the AS 2 are not neighbors. Therefore, the network device in the AS X may determine that path hijacking occurs.

In an example, if the security verification information further includes the routing transmission path that supports transmission through the first network domain, the network device may further perform security verification on the first BGP routing information with reference to the routing transmission path, for example, determine whether a valley path in the transmission path of the first BGP routing information is the routing transmission path that supports transmission through the first network domain.

For example, in the scenario shown in FIG. 2d, the network device in the AS X determines, based on a second business relationship of the AS 1, that a transmission path of the AS 1→the AS 2→the AS X is a valley path. It can be learned from a routing transmission path that supports transmission through the AS 2, that the transmission path of the AS 1→the AS 2→the AS X is valid. Therefore, the network device in the AS X may determine that the received first BGP routing information passes security verification.

It can be learned from the foregoing descriptions that, according to the solution in embodiments of this application, when performing security verification on the BGP routing information, in addition to performing security verification by using the first business relationship of the network domain, the network device may further perform security verification on the BGP routing information with reference to the second business relationship. In addition, in some scenarios, security verification may be further performed on the BGP routing information with reference to the topological relationship of the network domain and/or the routing transmission path that supports transmission through the network domain. Compared with the conventional technology, in this solution, security verification is performed on the BGP routing information with reference to more information, and correspondingly, an obtained verification result is more accurate.

Based on the information processing method provided in the foregoing method embodiments, embodiments of this application further provide a corresponding information processing apparatus. The following describes, with reference to the accompanying drawings, the information processing apparatus provided in embodiments of this application.

FIG. 5 is a diagram of a structure of an information processing apparatus according to an embodiment of this application. The information processing apparatus shown in FIG. 5 may be used in a network device, and is configured to perform the information processing method performed by the network device in the foregoing method embodiments.

In an example, the information processing apparatus 500 shown in FIG. 5 may include a receiving unit 501 and a processing unit 502.

The receiving unit 501 is configured to receive security verification information sent by a server, where the security verification information is used to perform security verification on border gateway protocol BGP routing information, the security verification information includes a first business relationship corresponding to a first network domain and a second business relationship corresponding to the first network domain, and the first business relationship is customer to provider C2P.

The processing unit 502 is configured to store the security verification information.

The server mentioned herein may correspond to the first server in the foregoing method embodiments.

In a possible implementation, the processing unit 502 is further configured to: obtain first BGP routing information; and perform security verification on the first BGP routing information based on the security verification information.

In a possible implementation, the security verification information further includes a topological relationship of the first network domain and/or a routing transmission path that supports transmission through the first network domain.

In a possible implementation, the topological relationship of the first network domain includes at least one second network domain that has a neighbor relationship with the first network domain.

In a possible implementation, the routing transmission path that supports transmission through the first network domain includes a routing transmission path that supports transmission through the first network domain and that does not comply with a routing transmission constraint.

In a possible implementation, the second business relationship includes one or more of the following: provider to customer P2C, peer to peer P2P, sibling sibling, partial transit partial, and hybrid hybrid.

In a possible implementation, the apparatus further includes: a sending unit, configured to send a request message to the server, where the request message is used to request information used to perform security verification on the BGP routing information. The receiving unit 501 is configured to receive the security verification information returned by the server for the request message.

In a possible implementation, the request message includes an information type, the information type indicates the server to return, to the network device, information that is about the information type and that is for performing security verification on the BGP routing information, and correspondingly, the security verification information includes the information about the information type.

In a possible implementation, the receiving unit 501 is configured to receive a first protocol data unit PDU sent by the server, where the first PDU includes the security verification information.

In a possible implementation, the first PDU includes at least one first type length value TLV field, the at least one first TLV field is used to carry the security verification information, and one first TLV field is used to carry one type of information in the security verification information.

In a possible implementation, the receiving unit 501 is configured to receive a second PDU and a third PDU that are sent by the server, where the second PDU includes the first business relationship, and the third PDU includes other information in the security verification information other than the first business relationship.

In a possible implementation, the third PDU includes at least one second TLV, the at least one second TLV is used to carry the other information, and one second TLV carries one type of information in the other information.

Because the information processing apparatus 500 and the information processing method performed by the network device in the method embodiments belong to the same concept, for a specific implementation of each unit of the information processing apparatus 500, refer to related descriptions in the foregoing method embodiments. Details are not described herein again.

FIG. 6 is a diagram of a structure of an information processing apparatus according to an embodiment of this application. The information processing apparatus shown in FIG. 6 may be used in a first server, and is configured to perform the information processing method performed by the first server in the foregoing method embodiments.

In an example, the information processing apparatus 600 shown in FIG. 6 may include a processing unit 601 and a sending unit 602.

The processing unit 601 is configured to obtain security verification information, where the security verification information is used to perform security verification on border gateway protocol BGP routing information, the security verification information includes a first business relationship corresponding to a first network domain and a second business relationship corresponding to the first network domain, and the first business relationship is customer to provider C2P.

The sending unit 602 is configured to send the security verification information to a network device.

In a possible implementation, the security verification information further includes a topological relationship of the first network domain and/or a routing transmission path that supports transmission through the first network domain.

In a possible implementation, the topological relationship includes at least one second network domain that has a neighbor relationship with the first network domain.

In a possible implementation, the routing transmission path that supports transmission through the first network domain includes a routing transmission path that supports transmission through the first network domain and that does not comply with a routing transmission constraint.

In a possible implementation, the second business relationship includes one or more of the following: provider to customer P2C, peer to peer P2P, sibling sibling, partial transit partial, and hybrid hybrid.

In a possible implementation, the apparatus further includes: a receiving unit, configured to obtain a simplified local internet number resource management SLURM file corresponding to the first network domain, where the SLURM file includes the security verification information. The processing unit 601 is further configured to store the security verification information.

In a possible implementation, the SLURM file includes a first object, and the first object carries the security verification information.

In a possible implementation, the SLURM file includes a second object and a third object, and the second object and the third object jointly carry the security verification information.

In a possible implementation, the second object carries the first business relationship, and the third object carries other information in the security verification information other than the first business relationship.

In a possible implementation, the sending unit 602 is further configured to send an information synchronization message to a second server, where the information synchronization message is used to request synchronization of information used to perform security verification on the BGP routing information; and the receiving unit is configured to receive the SLURM file that corresponds to the first network domain and that is sent by the second server.

In a possible implementation, the receiving unit included in the apparatus is further configured to receive a request message sent by the network device, where the request message is used to request the information used to perform security verification on the BGP routing information; and the sending unit 602 is configured to send the security verification information to the network device based on the request information.

In a possible implementation, the request message includes an information type, the information type indicates the first server to return, to the network device, information that is about the information type and that is for performing security verification on the BGP routing information, and correspondingly, the security verification information includes the information about the information type.

In a possible implementation, the sending unit 602 is configured to send a first protocol data unit PDU to the network device, where the first PDU includes the security verification information.

In a possible implementation, the first PDU includes at least one first type length value TLV field, the at least one first TLV field is used to carry the security verification information, and one first TLV field is used to carry one type of information in the security verification information.

In a possible implementation, the sending unit 602 is configured to send a second PDU and a third PDU to the network device, where the second PDU includes the first business relationship, and the third PDU includes other information in the security verification information other than the first business relationship.

In a possible implementation, the third PDU includes at least one second TLV, the at least one second TLV is used to carry the other information, and one second TLV carries one type of information in the other information.

Because the information processing apparatus 600 and the information processing method performed by the first server in the method embodiments belong to the same concept, for a specific implementation of each unit of the information processing apparatus 600, refer to related descriptions in the foregoing method embodiments. Details are not described herein again.

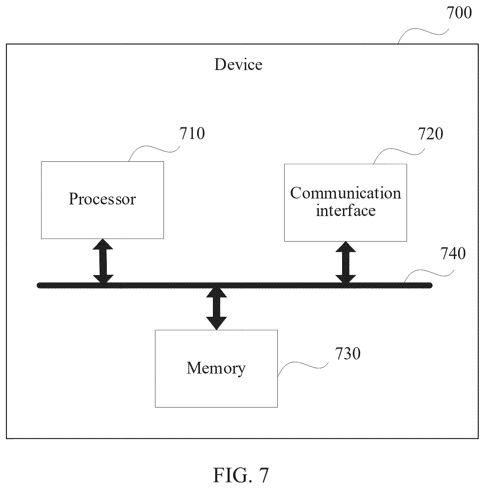

It should be noted that hardware structures of the information processing apparatus 500 and the information processing apparatus 600 mentioned above may be a structure shown in FIG. 7. FIG. 7 is a diagram of a structure of a device according to an embodiment of this application.

Refer to FIG. 7. The device 700 includes a processor 710, a communication interface 720, and a memory 730. The device 700 may include one or more processors 710. In FIG. 7, one processor is used as an example. In this embodiment of this application, the processor 710, the communication interface 720, and the memory 730 may be connected via a bus system or in another manner. In FIG. 7, an example in which the connection is implemented via a bus system 740 is used.

The processor 710 may be a central processing unit (central processing unit, CPU), a network processor (network processor, NP), or a combination of a CPU and an NP. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof.

The memory 730 may include a volatile memory (English: volatile memory), for example, a random access memory (random access memory, RAM). The memory 730 may alternatively include a non-volatile memory (English: non-volatile memory), for example, a flash memory (English: flash memory), a hard disk drive (hard disk drive, HDD), or a solid-state drive (solid-state drive, SSD). The memory 730 may alternatively include a combination of the foregoing types of memories. For example, the memory 730 may store the foregoing security verification information.

Optionally, the memory 730 stores an operating system and a program, an executable module or a data structure, a subset thereof, or an extended set thereof. The program may include various operation instructions, to implement various operations. The operating system may include various system programs, to implement various basic services and process a hardware-based task. The processor 710 may read a program in the memory 730, to implement the information processing method provided in embodiments of this application.

The bus system 740 may be a peripheral component interconnect (peripheral component interconnect, PCI) bus, an extended industry standard architecture (extended industry standard architecture, EISA) bus, or the like. The bus system 740 may be classified into an address bus, a data bus, a control bus, and the like. For ease of representation, only one bold line is used for representation in FIG. 7, but this does not mean that there is only one bus or only one type of bus.

An embodiment of this application further provides a computer-readable storage medium, including instructions or a computer program. When the instructions or the computer program is run on a computer, the computer is caused to perform the information processing method provided in the foregoing embodiments.

An embodiment of this application further provides a computer program product including instructions or a computer program. When the instructions or the computer program is run on a computer, the computer is caused to perform the information processing method provided in the foregoing embodiments.

An embodiment of this application further provides a communication system. The communication system may include the first server and the network device in the information processing method corresponding to the foregoing method embodiments.

In the specification, claims, and accompanying drawings of this application, the terms "first", "second", "third", "fourth", and the like (if any) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "have", and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical service division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard drive, a read-only memory (read-only memory, ROM), a random access memory (random access memory, RAM), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing is merely specific implementations of the present invention.

The foregoing embodiments are intended merely to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements may be made to a part of technical features thereof, without departing from the scope of the technical solutions of embodiments of this application.

## Claims

1. An information processing method, applied to a network device, wherein the method comprises:
receiving security verification information sent by a server, wherein the security verification information is used to perform security verification on border gateway protocol BGP routing information, the security verification information comprises a first business relationship corresponding to a first network domain and a second business relationship corresponding to the first network domain, and the first business relationship is customer to provider C2P; and
storing the security verification information.

2. The method according to claim 1, wherein the method further comprises:
obtaining first BGP routing information; and
performing security verification on the first BGP routing information based on the security verification information.

3. The method according to claim 1 or 2, wherein the security verification information further comprises:
a topological relationship of the first network domain and/or a routing transmission path that supports transmission through the first network domain.

4. The method according to claim 3, wherein the topological relationship of the first network domain comprises:
at least one second network domain that has a neighbor relationship with the first network domain.

5. The method according to claim 3 or 4, wherein the routing transmission path that supports transmission through the first network domain comprises:
a routing transmission path that supports transmission through the first network domain and that does not comply with a routing transmission constraint.

6. The method according to any one of claims 1 to 5, wherein the second business relationship comprises one or more of the following:
provider to customer P2C, peer to peer P2P, sibling sibling, partial transit partial, and hybrid hybrid.

7. The method according to any one of claims 1 to 6, wherein the method further comprises:
sending a request message to the server, wherein the request message is used to request information used to perform security verification on the BGP routing information; and
receiving the security verification information sent by the server comprises:
receiving the security verification information returned by the server for the request message.

8. The method according to claim 7, wherein the request message comprises an information type, the information type indicates the server to return, to the network device, information that is about the information type and that is for performing security verification on the BGP routing information, and correspondingly, the security verification information comprises the information about the information type.

9. The method according to any one of claims 1 to 8, wherein receiving the security verification information sent by the server comprises:
receiving a first protocol data unit PDU sent by the server, wherein the first PDU comprises the security verification information.

10. The method according to claim 9, wherein the first PDU comprises at least one first type length value TLV field, the at least one first TLV field is used to carry the security verification information, and one first TLV field is used to carry one type of information in the security verification information.

11. The method according to any one of claims 1 to 8, wherein receiving the security verification information sent by the server comprises:
receiving a second PDU and a third PDU that are sent by the server, wherein the second PDU comprises the first business relationship, and the third PDU comprises other information in the security verification information other than the first business relationship.

12. The method according to claim 11, wherein the third PDU comprises at least one second TLV, the at least one second TLV is used to carry the other information, and one second TLV carries one type of information in the other information.

13. An information processing method, applied to a first server, wherein the method comprises:
obtaining security verification information, wherein the security verification information is used to perform security verification on border gateway protocol BGP routing information, the security verification information comprises a first business relationship corresponding to a first network domain and a second business relationship corresponding to the first network domain, and the first business relationship is customer to provider C2P; and
sending the security verification information to a network device.

14. The method according to claim 13, wherein the security verification information further comprises:
a topological relationship of the first network domain and/or a routing transmission path that supports transmission through the first network domain.

15. The method according to claim 14, wherein the topological relationship comprises:
at least one second network domain that has a neighbor relationship with the first network domain.

16. The method according to claim 14 or 15, wherein the routing transmission path that supports transmission through the first network domain comprises:
a routing transmission path that supports transmission through the first network domain and that does not comply with a routing transmission constraint.

17. The method according to any one of claims 13 to 16, wherein the second business relationship comprises one or more of the following:
provider to customer P2C, peer to peer P2P, sibling sibling, partial transit partial, and hybrid hybrid.

18. The method according to any one of claims 13 to 17, wherein the method further comprises:
obtaining a simplified local internet number resource management SLURM file corresponding to the first network domain, wherein the SLURM file comprises the security verification information; and
storing the security verification information.

19. The method according to claim 18, wherein the SLURM file comprises a first object, and the first object carries the security verification information.

20. The method according to claim 18, wherein the SLURM file comprises a second object and a third object, and the second object and the third object jointly carry the security verification information.

21. The method according to claim 20, wherein the second object carries the first business relationship, and the third object carries other information in the security verification information other than the first business relationship.

22. The method according to any one of claims 18 to 21, wherein the method further comprises:
sending an information synchronization message to a second server, wherein the information synchronization message is used to request synchronization of information used to perform security verification on the BGP routing information; and
the obtaining the SLURM file corresponding to the first network domain comprises:
receiving the SLURM file that corresponds to the first network domain and that is sent by the second server.

23. The method according to any one of claims 13 to 22, wherein the method further comprises:
receiving a request message sent by the network device, wherein the request message is used to request the information used to perform security verification on the BGP routing information; and
the sending the security verification information to the network device comprises:
sending the security verification information to the network device based on the request information.

24. The method according to claim 23, wherein the request message comprises an information type, the information type indicates the first server to return, to the network device, information that is about the information type and that is for performing security verification on the BGP routing information, and correspondingly, the security verification information comprises the information about the information type.

25. The method according to any one of claims 13 to 24, wherein the sending the security verification information to the network device comprises:
sending a first protocol data unit PDU to the network device, wherein the first PDU comprises the security verification information.

26. The method according to claim 25, wherein the first PDU comprises at least one first type length value TLV field, the at least one first TLV field is used to carry the security verification information, and one first TLV field is used to carry one type of information in the security verification information.

27. The method according to any one of claims 13 to 24, wherein the sending the security verification information to the network device comprises:
sending a second PDU and a third PDU to the network device, wherein the second PDU comprises the first business relationship, and the third PDU comprises other information in the security verification information other than the first business relationship.

28. The method according to claim 27, wherein the third PDU comprises at least one second TLV, the at least one second TLV is used to carry the other information, and one second TLV carries one type of information in the other information.

29. An information processing apparatus, used in a network device, wherein the apparatus comprises:
a receiving unit, configured to receive security verification information sent by a server, wherein the security verification information is used to perform security verification on border gateway protocol BGP routing information, the security verification information comprises a first business relationship corresponding to a first network domain and a second business relationship corresponding to the first network domain, and the first business relationship is customer to provider C2P; and
a processing unit, configured to store the security verification information.

30. An information processing apparatus, used in a first server, wherein the apparatus comprises:
a processing unit, configured to obtain security verification information, wherein the security verification information is used to perform security verification on border gateway protocol BGP routing information, the security verification information comprises a first business relationship corresponding to a first network domain and a second business relationship corresponding to the first network domain, and the first business relationship is customer to provider C2P; and
a sending unit, configured to send the security verification information to a network device.

31. A device, comprising a processor and a memory, wherein
the memory is configured to store instructions or a computer program; and
the processor is configured to execute the instructions or the computer program, to perform the method according to any one of claims 1 to 28.

32. A computer-readable storage medium, comprising instructions or a computer program, wherein when the instructions or the computer program is run on a computer, the computer is caused to perform the method according to any one of claims 1 to 28.

33. A communication system, wherein the system comprises:
a network device that performs the method according to any one of claims 1 to 12, and a first server that performs the method according to any one of claims 13 to 28.

34. A computer program product, comprising a computer program, wherein when the computer program is run on a processor, the method according to any one of claims 1 to 28 is performed.
